# EUROPEAN PATENT APPLICATION

(11) **EP 4 845 112 A1**
(43) Date of publication of application: **25.11.2026**
(21) Application number: 25751416.6
(22) Date of filing: 26.01.2025
(51) Int. Cl.: H04L 27/36

(54) **COMMUNICATION METHOD AND RELATED APPARATUS**

(30) Priority: 05.02.2024 CN 202410168745
(71) Applicant: Huawei Technologies Co., Ltd., Shenzhen, Guangdong 518129 (CN)
(72) Inventor: DONG, Pengpeng, Shenzhen, Guangdong 518129 (CN)
(74) Representative: Huawei European IPR
(86) International application number: PCT/CN2025/075355
(87) International publication number: WO 2025/167816

(57) **Abstract**

This application provides a communication method and a communication apparatus, applied to the field of communication technologies. According to technical solutions provided in this application, a constellation diagram that satisfies a preset relational expression with a linear combination of a plurality of constellation diagrams is used for modulating a bit sequence, to obtain a complex-valued modulation symbol. The technical solutions of this application help meet requirements for transmission of information with different transmission performance.

## Description

This application claims priority to Chinese Patent Application No. 202410168745.2, filed with the China National Intellectual Property Administration on February 5, 2024 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

In the communication field, different information in a communication device has different transmission performance requirements. For example, extended reality (extended reality, XR), mixed reality (mixed reality, MR), and immersive services have different transmission performance requirements.

Therefore, for different information in a same communication device, how to meet different transmission performance requirements is an urgent technical issue to be resolved.

### SUMMARY

This application provides a communication method, a communication apparatus, and a communication system, to help meet different transmission performance requirements for different information in a same communication device.

According to a first aspect, this application provides a communication method. The communication method may be applied to a communication device. The communication method includes: performing m-order modulation on a first bit sequence corresponding to a first channel by using a combined constellation diagram, where the combined constellation diagram and a linear combination of n constellation diagrams satisfy a preset relational expression, both m and n are integers greater than 1, a modulation order of the combined constellation diagram is m and is equal to a sum of modulation orders of the n constellation diagrams, and weights of at least two of the n constellation diagrams in the linear combination are different.

The communication device may be a network device or a terminal. The communication device may be referred to as a transmit end or an encoder end.

It may be understood that the constellation diagram obtained through the linear combination of the n constellation diagrams has the following characteristic: In the n constellation diagrams, bit sequences corresponding to constellation points in constellation diagrams with different weights correspond to constellation points with different distances from each other in the combined constellation diagram. Complex-valued modulation symbols corresponding to constellation points with different distances between each other have different resistance to channel fading. In this way, a plurality of pieces of information in a same communication device are mapped to constellation points with different distances between each other in the combined constellation diagram by using constellation diagrams with different weights, so that different transmission performance requirements of the plurality of pieces of information can be implemented.

In some possible implementations, the first bit sequence is an encoded bit sequence, that is, the first bit sequence includes encoded bits obtained through encoding.

In some other possible implementations, the first bit sequence is an uncoded bit sequence. In this implementation, performing m-order modulation on the first bit sequence may include: performing m-order modulation on n bit segments or one bit segment obtained by encoding the first bit sequence, where encoding code rates of at least two encoded bit segments in the n encoded bit segments are different.

Optionally, a constellation diagram with a large weight corresponds to a bit segment with a high code rate. Because a distance between constellation points corresponding to a constellation diagram with a large weight is large, even when a constellation point is shifted, a probability that a received constellation point is incorrectly detected is lower. Therefore, when a transmit end performs error correction encoding on a bit segment corresponding to the constellation diagram with the large weight, a high code rate may be used, or even no encoding may be performed, so that encoding complexity can be reduced.

From a perspective of a receive end or a decoder, this helps reduce encoding and decoding complexity, and reduce encoding power consumption and decoding power consumption of the communication device.

In some possible implementations of the method, a weight of at least one of the n constellation diagrams in the linear combination is associated with a modulation order of at least one remaining constellation diagram in the n constellation diagrams.

For example, there is a preset relational expression between the weight of the at least one constellation diagram in the linear combination and the modulation order of the at least one remaining constellation diagram in the n constellation diagrams, and the weight of the constellation diagram may be determined based on the preset relational expression and the modulation order of the at least one remaining constellation diagram.

In some possible implementations of the method, a weight *α*ₜ of a t^{th} constellation diagram in the n constellation diagrams in the linear combination satisfies the following relational expression: ${α}_{t} = {2}^{\frac{{\sum }_{k = 1}^{t - 1} {Q}_{k}}{2} .}$

t is an integer, t is greater than or equal to 2, t is less than or equal to n, and *Q*ₖ represents a modulation order of a k^{th} constellation diagram in the n constellation diagrams.

In some examples of this implementation, a value of the weight *α*ₜ may be preset, and the value of the weight *α*ₜ needs to satisfy the foregoing relational expression.

In some possible implementations of the method, the n constellation diagrams include a first constellation diagram and a second constellation diagram. The first constellation diagram is a 2-order constellation diagram, and a weight of the second constellation diagram is 2.

In some examples of this implementation, the first constellation diagram is a quadrature phase shift keying (quadrature phase shift keying, QPSK) constellation diagram.

In some examples of this implementation, the second constellation diagram is a QPSK constellation diagram.

When the first constellation diagram is a QPSK constellation diagram, and the second constellation diagram is a QPSK constellation diagram, in some examples of this implementation, a mapping expression of the first constellation diagram is (1-2*b*(4*i*))+ *j*(1-2*b*(4*i*+1)), and a mapping expression of the second constellation diagram is (1-2*b*(4*i*+2)) + *j*(1-2*b*(4*i*+3)). *ᵢ* is an integer less than or equal to a quotient obtained by dividing a quantity of bits in a to-be-mapped bit sequence by a modulation order of a constellation diagram, *b*(*x*) represents a bit with an index x in the to-be-mapped bit sequence, and *ⱼ* represents an imaginary part.

It may be understood that an index sorting direction of a bit combination in this application is the same as an index value sorting direction of bits, and starting values are the same. For example, bits of the to-be-mapped bit sequence are sorted in a direction from left to right or from right to left, and both indexes of a bit combination and indexes of bits are numbered from 0.

In some possible implementations of the method, the n constellation diagrams include a first constellation diagram and a second constellation diagram. The first constellation diagram is a 4-order constellation diagram, and a weight of the second constellation diagram is 4.

In some examples of this implementation, the first constellation diagram is a 16QAM constellation diagram.

In some examples of this implementation, the second constellation diagram is a QPSK constellation diagram or a 16QAM constellation diagram.

When the first constellation diagram is a 16-quadrature amplitude modulation (quadrature amplitude modulation, QAM) constellation diagram, and the second constellation diagram is a QPSK constellation diagram, in some examples of this implementation, a mapping expression of the first constellation diagram is (1-2*b*(6*i*+2))(2-(1-2*b*(6*i*+4)))+*j*(1-2*b*(6*i*+3))(2-(1-2*b*(6*i*+5))), and a mapping expression of the second constellation diagram is (1-2*b*(6*i*))+ *j*(1-2*b*(6*i*+1)).

When the first constellation diagram is a 16QAM constellation diagram, and the second constellation diagram is a 16QAM constellation diagram, in some examples of this implementation, a mapping expression of the first constellation diagram is (1-2*b*(8*i*+4))(2-(1-2*b*(8*i*+6)))+ *j*(1-2*b*(8*i*+5))(2-(1-2*b*(8*i*+7)), and a mapping expression of the second constellation diagram is (1-2*b*(8*i*))(2-(1-2*b*(8*i* +2)))+*j*(1-2*b*(8*i* +1))(2-(1-2*b*(8*i* +3))).

In some possible implementations of the method, the n constellation diagrams include a first constellation diagram and a second constellation diagram. The first constellation diagram is a 6-order constellation diagram, and a weight of the second constellation diagram is 8.

In some examples of this implementation, the first constellation diagram is a 64QAM constellation diagram.

In some examples of this implementation, the second constellation diagram is a 16QAM constellation diagram.

When the first constellation diagram and the second constellation diagram are 16QAM constellation diagrams, a mapping expression of the first constellation diagram may be (1 - 2*b*(10*i* + 4))(4 - (1 - 2*b*(10*i* + 6)))(2 - (1 - 2*b*(10*i* + 8))) + *j*(1 - 2*b*(10*i* + 5))(4 - (1 - 2*b*(10*i* + 7)))(2 - (1 - 2*b*(10*i* + 9))) , and a mapping expression of the second constellation diagram is (1 - 2*b*(10*i*))2 - (1 - *2b*(10*i* + 2))) + *j*(1 - 2*b*(10*i* + 1))(2 - (1 - 2*b*(10*i +* 3))).

In some possible implementations of the method, the n constellation diagrams include a first constellation diagram, a second constellation diagram, and a third constellation diagram. The first constellation diagram is a 2-order constellation diagram, the second constellation diagram is a 2-order constellation diagram, a weight of the second constellation diagram is 2, and a weight of the third constellation diagram is 4.

In some examples of this implementation, the first constellation diagram is a QPSK constellation diagram.

In some examples of this implementation, the second constellation diagram is a QPSK constellation diagram.

In some examples of this implementation, the third constellation diagram is a QPSK constellation diagram.

When the first constellation diagram is a QPSK constellation diagram, the second constellation diagram is a QPSK constellation diagram, and the third constellation diagram is a QPSK constellation diagram, in some examples of this implementation, a mapping expression of the first constellation diagram is (1 - 2*b*(6*i* + 4)) + *j*(1 - 2*b*(6*i* + 5)) , a mapping expression of the second constellation diagram is ( 1 - 2*b*(6*i* + 2)) + *j*(1 - 2*b*(6*i* + 3)) , and a mapping expression of the third constellation diagram is (1 - 2*b*(6*i*)) *+ j*(1 - 2*b*(6*i* + 1)) .

In any one of the foregoing implementations including the first constellation diagram, for example, a weight of the first constellation diagram may be 1.

In some possible implementations of this method, the linear combination satisfies the following relational expression: $d ′ = {\sum }_{t = 2}^{n} \pm {α}_{t} \times {d}_{t} \pm {d}_{1} .$

*d'* represents the constellation diagram obtained through the linear combination, *α*ₜ represents a weight of a t^{th} constellation diagram in the n constellation diagrams in the linear combination, *d*₁ represents a 1^{st} constellation diagram in the n constellation diagrams, and *dₜ* represents the t^{th} constellation diagram in the n constellation diagrams.

It may be understood that "± " in the formula represents that the symbol may be a plus sign "+" or a minus sign "-", one of which may be selected. For example, when the symbol preceding each term is a plus sign "+", the foregoing relational expression is: $d ′ = {\sum }_{t = 2}^{n} {α}_{t} \times {d}_{t} + {d}_{1}$. For another example, when the symbol preceding *d*₁ is a minus sign "-", and the symbol preceding the other item is plus signs "+", the foregoing relational expression is: $d ′ = {\sum }_{t = 2}^{n} {α}_{t} \times {d}_{t} - {d}_{1}$.

In some examples of this implementation, n=2. *d*₁ may be referred to as the first constellation diagram, and *d*₂ may be referred to as the second constellation diagram. For some examples of the first constellation diagram, the second constellation diagram, the weight of the first constellation diagram, and the weight of the second constellation diagram, refer to the foregoing content.

In some examples of this implementation, n=3. *d*₁ may be referred to as the first constellation diagram, *d*₂ may be referred to as the second constellation diagram, or *d*₃ may be referred to as the third constellation diagram. For some examples of the first constellation diagram, the second constellation diagram, the third constellation diagram, the weight of the first constellation diagram, the weight of the second constellation diagram, and the weight of the third constellation diagram, refer to the foregoing content.

In some possible implementations of the method, the combined constellation diagram and the linear combination satisfy the following relational expression: $d = S \times d ′ .$

*d*^{'} represents the linear combination, *d* represents the combined constellation diagram, and *S* represents a power normalization factor of the linear combination.

In some possible implementations of the method, the method further includes: receiving first information, where the first information indicates the linear combination.

In this implementation, the linear combination may be indicated, by a communication peer end based on the first information, to the communication device currently performing modulation, to ensure consistency between modulation and demodulation at both ends, thereby ensuring communication reliability.

In some possible implementations of the method, the method further includes: sending first information, where the first information indicates the linear combination.

In this implementation, the linear combination may be indicated, by the communication device currently performing modulation, to the communication peer end based on the first information, to ensure consistency between modulation and demodulation at the two ends, thereby ensuring communication reliability.

In some possible implementations of the method, the linear combination may be prespecified in a communication standard. The linear combination is pre-configured in the communication device based on the communication standard.

In some possible implementations of the method, the method further includes: sending second information, where the second information indicates the combined constellation diagram.

In this implementation, the communication device sends the second information, to help the receive end obtain the combined constellation diagram, so that demodulation can be performed based on the combined constellation diagram, thereby achieving consistency between modulation at the transmit end and demodulation at the receive end.

In some possible implementations of the method, the method further includes: receiving second information, where the second information indicates the combined constellation diagram.

In this implementation, the communication device receives the second information, and may obtain the combined constellation diagram, so that modulation can be performed based on the combined constellation diagram, thereby achieving consistency between modulation at the transmit end and demodulation at the receive end.

In the foregoing two implementations, the transmit end and the receive end may synchronize the combined constellation diagram through information exchange, so that communication flexibility can be improved, and communication performance can be better improved.

In some possible implementations of the method, the combined constellation diagram may be preset. For example, the combined constellation diagram is preset in a communication standard. In this implementation, the receive end and the transmit end may not need to exchange information used for determining the combined constellation diagram, so that signaling overheads can be reduced.

According to a second aspect, this application provides a communication method. The method includes: obtaining a complex-valued modulation symbol corresponding to a first channel; and performing m-order demodulation on the complex-valued modulation symbol based on a combined constellation diagram, where the combined constellation diagram and a linear combination of n constellation diagrams satisfy a preset relational expression, both m and n are integers greater than 1, a modulation order of the combined constellation diagram is m and is equal to a sum of modulation orders of the n constellation diagrams, and weights of at least two of the n constellation diagrams in the linear combination are different. Alternatively, the method includes: obtaining a complex-valued modulation symbol corresponding to a first channel, where the first channel is from another device, the complex-valued modulation symbol is obtained by performing m-order modulation on a first bit sequence based on a combined constellation diagram, the combined constellation diagram and a linear combination of n constellation diagrams satisfy a preset relational expression, both m and n are integers greater than 1, and a modulation order of the combined constellation diagram is m and is equal to a sum of modulation orders of the n constellation diagrams.

The communication device may be a network device or a terminal. The communication device may be referred to as a receive end or a decoder.

For the combined constellation diagram in the method, refer to the combined constellation diagram in the first aspect. Details are not described herein again. The method may help meet different transmission performance requirements for different information in a same communication device. In addition, the method can further reduce decoding complexity of the communication device. For example, for bit segments obtained through modulation based on the combined constellation diagram, decoding complexity of bits corresponding to constellation diagrams with larger weights may be lower than decoding complexity of bits corresponding to constellation diagrams with smaller weights, or even some bits do not need to be decoded. It may be understood that all possible implementations of the first aspect may be applied to the second aspect.

According to a third aspect, this application provides a communication apparatus. The communication apparatus may include modules that perform the corresponding methods/operations/steps/actions described in the first aspect. The modules may be implemented by a hardware circuit, software, or a combination of a hardware circuit and software.

In a design, the apparatus may include a processing module and a communication module. The communication module is configured to perform a sending action and a receiving action in the method described in the first aspect, and the processing module is configured to perform a processing action in the method described in the first aspect.

In a design, the apparatus may be a terminal, or may be an apparatus, a module, a circuit, a chip, or the like that is configured and disposed in the terminal, or may be an apparatus that can be used in cooperation with the terminal.

In a design, the apparatus may be a network device, or may be an apparatus, a module, a circuit, a chip, or the like that is configured and disposed in the network device, or may be an apparatus that can be used in cooperation with the network device.

According to a fourth aspect, this application provides a communication apparatus. The communication apparatus may include modules that perform the corresponding methods/operations/steps/actions described in the second aspect. The modules may be implemented by a hardware circuit, software, or a combination of a hardware circuit and software.

In a design, the apparatus may include a processing module and a communication module. The communication module is configured to perform a sending action and a receiving action in the method described in the second aspect, and the processing module is configured to perform a processing action in the method described in the second aspect.

In a design, the apparatus may be a terminal, or may be an apparatus, a module, a circuit, a chip, or the like that is configured and disposed in the terminal, or may be an apparatus that can be used in cooperation with the terminal.

In a design, the apparatus may be a network device, or may be an apparatus, a module, a circuit, a chip, or the like that is configured and disposed in the network device, or may be an apparatus that can be used in cooperation with the network device.

According to a fifth aspect, an apparatus is provided. The apparatus includes a processor and a storage medium. The storage medium stores instructions. When the instructions are executed by the processor, the method according to any one of the first aspect or the possible implementations of the first aspect is implemented.

According to a sixth aspect, an apparatus is provided. The apparatus includes a processor and a storage medium. The storage medium stores instructions. When the instructions are executed by the processor, the method according to any one of the second aspect or the possible implementations of the second aspect is implemented.

According to a seventh aspect, an apparatus is provided. The apparatus includes a processing circuit. The processing circuit is configured to process data and/or information, to implement the method according to any one of the first aspect or the possible implementations of the first aspect.

The processing circuit may include one or more processors, or all or a part of a circuit having a processing function in the one or more processors.

Optionally, the apparatus may further include a memory. The memory is configured to store a program or instructions, and the processor is configured to run the program or the instructions, to implement the method according to any one of the first aspect or the possible implementations of the first aspect.

Optionally, the apparatus may further include a transceiver circuit or an input/output interface.

According to an eighth aspect, an apparatus is provided. The apparatus includes a processing circuit. The processing circuit is configured to process data and/or information, to implement the method according to any one of the second aspect or the possible implementations of the second aspect.

The processing circuit may include one or more processors, or all or a part of a circuit having a processing function in the one or more processors.

Optionally, the apparatus may further include a memory. The memory is configured to store a program or instructions, and the processor is configured to run the program or the instructions, to implement the method according to any one of the second aspect or the possible implementations of the second aspect.

Optionally, the apparatus may further include a transceiver circuit or an input/output interface.

According to a ninth aspect, a chip is provided. The chip includes a processing circuit. The processing circuit is configured to run a program or instructions, to implement the method according to any one of the first aspect or the possible implementations of the first aspect.

Optionally, the chip may further include a memory, and the memory is configured to store the program or the instructions.

Optionally, the chip may further include a transceiver circuit or an input/output interface.

According to a tenth aspect, a chip is provided. The chip includes a processing circuit. The processing circuit is configured to run a program or instructions, to implement the method according to any one of the second aspect or the possible implementations of the second aspect.

Optionally, the chip may further include a memory, and the memory is configured to store the program or the instructions.

Optionally, the chip may further include a transceiver circuit or an input/output interface.

According to an eleventh aspect, a computer-readable storage medium is provided. The computer-readable storage medium includes instructions, and when the instructions are executed by a processor, the method according to any one of the first aspect or the possible implementations of the first aspect is implemented.

According to a twelfth aspect, a computer-readable storage medium is provided. The computer-readable storage medium includes instructions, and when the instructions are executed by a processor, the method according to any one of the second aspect or the possible implementations of the second aspect is implemented.

According to a thirteenth aspect, a computer program product is provided. The computer program product includes computer program code or instructions, and when the computer program code or the instructions are executed, the method according to any one of the first aspect or the possible implementations of the first aspect is implemented.

According to a fourteenth aspect, a computer program product is provided. The computer program product includes computer program code or instructions, and when the computer program code or the instructions are executed, the method according to any one of the second aspect or the possible implementations of the second aspect is implemented.

According to a fifteenth aspect, a communication system is provided. The communication system includes an apparatus configured to perform the method according to any one of the first aspect or the possible implementations of the first aspect, and/or an apparatus configured to perform any one of the second aspect or the possible implementations of the second aspect.

### BRIEF DESCRIPTION OF DRAWINGS

FIG. 1 is a diagram of a communication system to which an embodiment of this application is applicable;
FIG. 2 is a diagram of a communication system to which an embodiment of this application is applicable;
FIG. 3 is a schematic flowchart of a communication method according to an embodiment of this application;
FIG. 4 is a diagram of obtaining a first bit sequence to which an embodiment of this application is applicable;
FIG. 5a and FIG. 5b are diagrams of a modulation method to which an embodiment of this application is applicable;
FIG. 6a, FIG. 6b, and FIG. 6c are example diagrams of a combination of a 4-order combined constellation diagram according to an embodiment of this application;
FIG. 7 is an example diagram of a combination of a 6-order combined constellation diagram according to an embodiment of this application;
FIG. 8 is an example diagram of a combination of an 8-order combined constellation diagram according to an embodiment of this application;
FIG. 9 is an example diagram of a combination of a 6-order combined constellation diagram according to another embodiment of this application;
FIG. 10 is a schematic flowchart of a communication method according to an embodiment of this application;
FIG. 11 is an example diagram of a structure of a communication apparatus according to this application; and
FIG. 12 is another example diagram of a structure of a communication apparatus according to this application.

### DESCRIPTION OF EMBODIMENTS

The following describes technical solutions in embodiments of this application with reference to the accompanying drawings in embodiments of this application.

To clearly describe the technical solutions in embodiments of this application, the terms such as "first" and "second" are used in embodiments of this application to distinguish between same items or similar items having basically same functions and purposes. A person skilled in the art may understand that the terms such as "first" and "second" do not limit a quantity or an execution sequence, and the terms such as "first" and "second" do not indicate a definite difference.

It should be noted that, in embodiments of this application, the terms such as "example" or "for example" are used to represent giving an example, an illustration, or a description. Any embodiment or design solution described as an "example" or "for example" in this application should not be explained as being more preferred or having more advantages than another embodiment or design solution. To be precise, use of the terms such as "example" or "for example" is intended to present a related concept in a specific manner.

In embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

The technical solutions provided in this application may be applied to communication networks such as the 3rd generation partnership project (3rd generation partnership project, 3GPP), zigbee (zigbee), long range radio (long range radio, Lora), Bluetooth (Bluetooth, BT), and wireless fidelity (wireless fidelity, Wi-Fi).

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system such as a 6th generation (6th generation, 6G) mobile communication system, or a converged system of a plurality of systems. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (Internet of Things, IoT) communication system, or another communication system.

A device in a communication system may send a signal to another device or receive a signal from another device. The signal may include information, signaling, data, or the like. The device may alternatively be replaced with an entity, a network entity, a communication device, a communication module, a node, a communication node, or the like. In the present disclosure, a device is used as an example for description. For example, the communication system may include at least one terminal device and at least one network device. The network device may send a downlink signal to the terminal device, and/or the terminal device may send an uplink signal to the network device. It may be understood that, in the present disclosure, the terminal device may be replaced with a first device, the network device may be replaced with a second device, and the terminal device and the network device perform a corresponding communication method in the present disclosure.

In embodiments of this application, the terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data, for example, a handheld device or a vehicle-mounted device having a wireless connection function. Currently, some examples of a terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, a terminal device in a future evolved public land mobile communication network (public land mobile network, PLMN), a device (device) in a zigbee network, a device in a Lora network, a Bluetooth slave (BT slave), a Bluetooth low energy slave (BLE slave), a Wi-Fi station (station, STA), and the like. This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a human body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, for example, various smart bands or smart jewelry for monitoring physical signs.

The terminal device may alternatively be a terminal device in the IoT system, or may be referred to as an IoT node. IoT is an important part in future development of information technologies. A main technical feature of the IoT is to connect things to a network by using a communication technology, to implement an intelligent network for human-machine interconnection and thing-thing interconnection. The connection can be implemented through broadband or narrowband technologies. The IoT technology can achieve massive connections, deep coverage, and terminal power saving by using, for example, a narrowband (narrowband, NB) technology. The IoT technology includes a backscatter communication technology, a spread spectrum technology, ultra-wideband (ultra-wideband, UWB), and the like. Details are not described again.

In embodiments of this application, an apparatus configured to implement a function of the terminal device may be a terminal device, or may be an apparatus that can support the terminal device in implementing the function, for example, a chip system. The apparatus may be installed in the terminal device or used in cooperation with the terminal device. In this embodiment of this application, the chip system may include a chip, or may include a chip and another discrete component. In embodiments of this application, an example in which the apparatus configured to implement the function of the terminal device is a terminal device is merely used for description, and constitutes no limitation on the solutions in embodiments of this application.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network.

A radio access network (radio access network, RAN) device in this application is a device having a wireless transceiver function. The radio access network device may provide a wireless communication function service, and may connect a terminal device to a wireless network. The radio access network device may also be referred to as an access network device or a network device. The network device in embodiments of this application may be a radio access network (radio access network, RAN) node (or device) that is used in a cellular network (or a mobile network) and that connects a terminal device to a wireless network, or may be a zigbee base station, Bluetooth master (BT master), Bluetooth low energy master (Bluetooth low energy master, BLE master), a Lora base station, or a Wi-Fi access point.

The base station may cover the following various names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). A specific technology and a specific device form that are used for the network device are not limited in embodiments of this application. In some deployments, the network device mentioned in embodiments of this application may be a device including a CU or a DU or including a CU and a DU, or a device including a CU control plane node (a central unit-control plane (central unit-control plane, CU-CP)), a CU user plane node (a central unit-user plane (central unit-user plane, CU-UP)), and a DU node. For example, the network device may include a gNB-CU-CP, a gNB-CU-UP, and a gNB-DU.

In some deployments, a plurality of RAN nodes coordinate to assist the terminal in implementing radio access, and different RAN nodes each implement a part of functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more types of fronthaul interfaces, and different fronthaul interfaces respectively correspond to DUs and RUs having different functions. If a fronthaul interface between a DU and an RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, in the fronthaul interface, a part of downlink and/or uplink baseband functions is moved for implementation. For example, for downlink, one or more of precoding (precoding), digital beamforming (beamforming, BF), or inverse fast Fourier transform (inverse fast Fourier transform, IFFT)/cyclic prefix (cyclic prefix, CP) addition is moved from the DU to the RU for implementation; and for uplink, one or more of digital beamforming (beamforming, BF) or fast Fourier transform (fast Fourier transform, FFT)/cyclic prefix (cyclic prefix, CP) removal is moved from the DU to the RU for implementation. In a possible implementation, the interface may be an enhanced common public radio interface (enhanced common public radio interface, eCPRI). In an eCPRI architecture, different split modes between the DU and the RU correspond to different categories (category, Cat) of eCPRIs, for example, eCPRI Cat A, B, C, D, E, and F.

The eCPRI Cat A is used as an example. For downlink transmission, with layer mapping as a splitting point. The DU is configured to implement the layer mapping and one or more functions before the layer mapping (to be specific, one or more of encoding, rate matching, scrambling, modulation, and the layer mapping), and other functions after the layer mapping (for example, one or more of resource element (resource element, RE) mapping, digital beamforming (beamforming, BF), or inverse fast Fourier transform (inverse fast Fourier transform, IFFT)/cyclic prefix (cyclic prefix, CP) addition) are moved to the RU for implementation. For uplink transmission, with RE demapping as a splitting point, the DU is configured to implement the demapping and one or more preceding functions (to be specific, one or more functions of decoding, rate de-matching, descrambling, demodulation, inverse discrete Fourier transform (inverse discrete Fourier transform, IDFT), channel equalization, and RE demapping), and another function (for example, one or more of digital BF or fast Fourier transform (fast Fourier transform, FFT)/CP removal) after the demapping is moved to the RU for implementation. It may be understood that, for function descriptions of DUs and RUs corresponding to various categories of eCPRIs, refer to an eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may alternatively have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by a software module, a hardware module, or a combination of the software module and the hardware module.

In embodiments of this application, an apparatus configured to implement a function of the network device may be a network device, or an apparatus that can support the network device in implementing the function, for example, a chip system, a hardware circuit, a software module, or a combination of the hardware circuit and the software module. The apparatus may be installed in the network device or used in cooperation with the network device. In embodiments of this application, an example in which the apparatus for implementing the function of the network device is the network device is merely used for description, and constitutes no limitation on the solutions in embodiments of this application.

The network device and/or the terminal device may be deployed on the land, including an indoor device, an outdoor device, a handheld device, or a vehicle-mounted device; may be deployed on the water; or may be deployed on an airplane, a balloon, and a satellite in the air. A scenario in which the network device and the terminal device are located is not limited in embodiments of this application. In addition, the terminal device and the network device may be hardware devices; may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

The technical solutions provided in embodiments of this application may be applied to channel encoding and decoding between communication devices. The channel encoding and decoding between the communication devices may include: channel encoding and decoding between a network device and a terminal, channel encoding and decoding between network devices, and channel encoding and decoding between terminals. In embodiments of this application, the term "channel encoding and decoding" may also be simply referred to as "coding", and the term "coding" may also be described as "channel encoding/decoding", "network coding", "outer coding", and "joint source-channel coding".

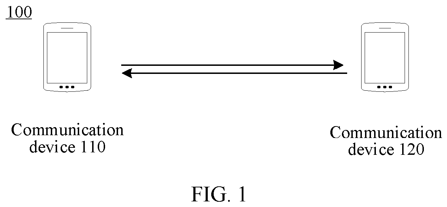

FIG. 1 is a diagram of a communication system applicable to a method according to an embodiment of this application. As shown in FIG. 1, the communication system 100 may include at least two communication devices, for example, a communication device 110 and a communication device 120 shown in FIG. 1.

Wireless communication may be performed between the communication devices on an air interface resource. The air interface resource may include at least one of a time domain resource, a frequency domain resource, a code resource, and a spatial resource. Any communication device may be a network device or a terminal device. For example, the communication device 110 is a network device, and the communication device 120 is a terminal device or a network device; or the communication device 110 is a terminal device, and the communication device 120 is a terminal device or a network device. The network device may also be referred to as a base station device.

The communication device 110 and the communication device 120 may communicate with each other via a radio link. Communication devices, for example, the communication device 110 and the communication device 120, in the communication system may communicate with each other by using a multiple-antenna technology.

For example, a single communication device may communicate with one or more communication devices, for example, transmit data or control signaling to one or more communication devices, and/or a plurality of communication devices may simultaneously transmit data or control signaling for a single communication device.

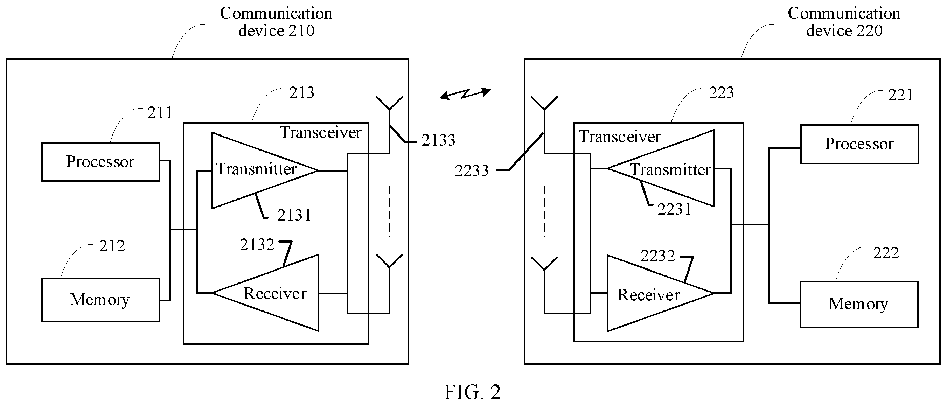

FIG. 2 is a diagram of another communication system applicable to a method is according to an embodiment of this application. As shown in FIG. 2, a communication device 210 includes a processor 211, a memory 212, and a transceiver 213. The transceiver 213 includes a transmitter 2131, a receiver 2132, and an antenna 2133. A communication device 220 includes a processor 221, a memory 222, and a transceiver 223. The transceiver 223 includes a transmitter 2231, a receiver 2232, and an antenna 2233.

Either of the communication device 210 and the communication device 220 may be a network device or a terminal device.

The processor 211, the memory 212, and the transceiver 213 communicate with each other through an internal connection path, and the processor 221, the memory 222, and the transceiver 223 communicate with each other through an internal connection path.

The receiver 2132 may be configured to receive transmission control information through the antenna 2133, and the transmitter 2131 may be configured to send transmission feedback information to the communication device 220 through the antenna 2133. The transmitter 2231 may be configured to send the transmission control information to the network device 210 through the antenna 2233, and the receiver 2232 may be configured to receive the transmission feedback information sent by the network device 210 through the antenna 2233.

It should be noted that FIG. 1 and FIG. 2 are merely simplified diagrams used as examples for ease of understanding. In actual application, the communication system may include more communication devices. A quantity of communication devices included in the communication system is not limited in embodiments of this application.

The communication system to which the technical solutions in embodiments of this application are applicable may further include another network element or entity. For example, the communication system to which the technical solutions in embodiments of this application are applicable may further include a core network. The core network may include one or more of the following entities: an access and mobility management function (access and mobility management function, AMF) entity, a session management function (Session Management Function, SMF) entity, a unified data management (unified data management, UDM) network element, a user plane function (user plane function, UPF) entity, and the like.

The AMF entity may also be referred to as an access and mobility management function, an access and mobility management device, an access and mobility management network element, an access management device, or a mobility management device, and is mainly configured for mobility management, access management, and the like.

Optionally, the AMF entity may be further configured to implement another function other than session management in functions of a mobility management entity (mobility management entity, MME). For example, the AMF entity may be configured to implement functions such as lawful interception, access authorization (or authentication), registration of user equipment, mobility management, a tracking area update procedure, reachability check, selection of a session management network element, and mobility state transition management.

The SMF entity is mainly configured for session-related service management, for example, session establishment.

The UDM network element is mainly configured for terminal device identifier processing, access authentication, registration, mobility management, and the like.

The UPF entity is located between a user access layer and a control layer, and is mainly configured to provide a user plane service.

The network element or the entity in the core network may have another name. This is not limited in this application.

To better understand the technical solutions in embodiments of this application, the following first describes meanings of some related concepts. A signal may be decomposed into a group of independent components: an in-phase (in-phase) component and a quadrature (quadrature) component. The in-phase component may be denoted as an I component, and the quadrature component may be denoted as a Q component. The two components are orthogonal and are independent of each other. For example, the signal herein may be represented as a binary sequence, and the binary sequence may include at least one bit.

The signal decomposed into the I component and the Q component may be represented as a complex number I+jQ, and the complex number I+jQ may also be referred to as a complex-valued modulation symbol corresponding to the signal. Based on the expression of the complex number, the signal may be mapped to a point on a complex plane with an I axis and a Q axis as coordinate axes, and the point is referred to as a constellation point. A projection of the signal onto the I axis is the I component, that is, a coordinate of the constellation point on the I axis. A projection of the signal onto the Q axis is the Q component, that is, a coordinate of the constellation point on the Q axis. The I axis may be referred to as a real axis, and the Q axis may be referred to as an imaginary axis.

In this embodiment, a relational expression that can map a signal to a corresponding complex-valued modulation symbol may also be understood as a modulation relational expression between the signal and the complex-valued modulation symbol, or as a mapping relational expression between the signal and the complex-valued modulation symbol. A diagram that represents a mapping relationship between a signal and a complex-valued modulation symbol by using constellation points on a complex plane may be referred to as a constellation diagram.

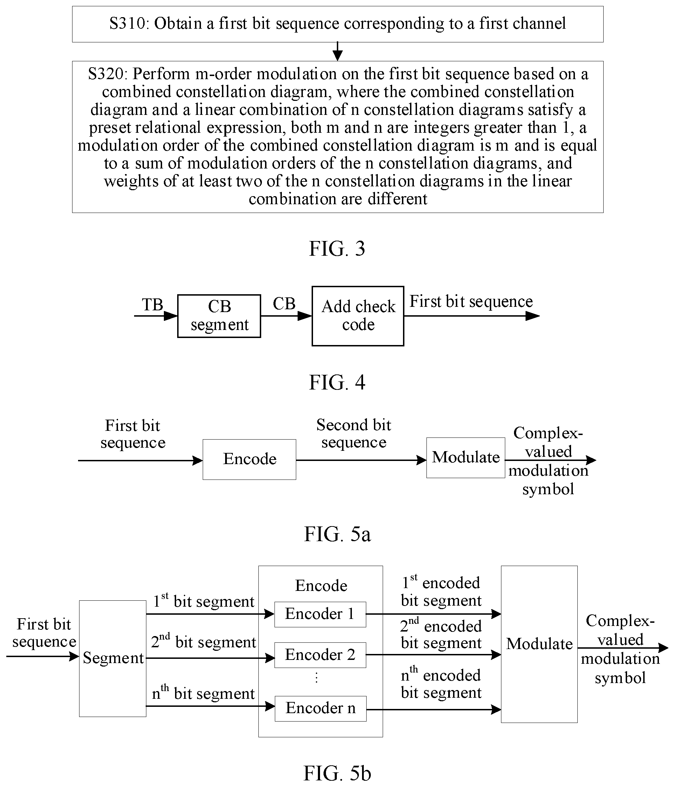

FIG. 3 is a schematic flowchart of a communication method according to an embodiment of this application. The method may include S310 and S320. The method may be performed by an encoding apparatus, and the encoding apparatus may also be referred to as a communication apparatus.

The encoding apparatus may be a communication device, or a chip, a chip system, a processor, or a processing circuit used in the communication device. An example of the communication device is a network device, a terminal, or a chip, a chip system, a processor, or a processing circuit used in the network device or the terminal. When performing the method in a communication process, the communication device may be referred to as a transmit end, or when serving as the transmit end, the communication device may perform the method.

S310: Obtain a first bit sequence corresponding to a first channel.

The first channel may be a control channel or a data channel. The first channel may be a logical or physical channel. The first channel is a channel between the encoding apparatus or a communication device to which the encoding apparatus belongs and another communication device.

It may be understood that the first channel may be an uplink channel, a downlink channel, or a sidelink (sidelink, SL).

When the first channel is an uplink channel, the first channel may be an uplink control channel or an uplink data channel. An example of the first channel being the uplink control channel is a physical uplink control channel (physical uplink control channel, PUCCH). An example of the first channel being the uplink data channel is a physical uplink shared channel (physical uplink shared channel, PUSCH).

When the first channel is a downlink channel, the first channel may be a broadcast channel, a downlink control channel, or a downlink data channel. An example of the first channel being the downlink control channel is a physical downlink control channel (physical downlink control channel, PDCCH). An example in which the first channel being the downlink data channel is a physical downlink shared channel (physical downlink shared channel, PDSCH).

The first bit sequence corresponding to the first channel may be understood as a bit sequence transmitted on the first channel, a bit sequence carried on the first channel, or a bit sequence of the first channel. The first bit sequence includes at least one bit.

All content of the first channel corresponds to a same terminal.

FIG. 4 is an example diagram of another implementation of obtaining the first bit sequence corresponding to the first channel. As shown in FIG. 4, a transport block (transport block, TB) may be first segmented to obtain code blocks (code blocks, CBs), and then cyclic redundancy check (cyclic redundancy check, CRC) bits are added to the CBs to obtain the first bit sequence.

S320: Perform m-order modulation on the first bit sequence based on a combined constellation diagram, where the combined constellation diagram and a linear combination of n constellation diagrams satisfy a preset relational expression, both m and n are integers greater than 1, a modulation order of the combined constellation diagram is m and is equal to a sum of modulation orders of the n constellation diagrams, and weights of at least two of the n constellation diagrams in the linear combination are different.

The combined constellation diagram is a constellation diagram that satisfies the preset relational expression with the linear combination of the n constellation diagrams.

The linear combination of the n constellation diagrams may be understood as: scaling each of the n constellation diagrams to obtain n scaled constellation diagrams in one-to-one correspondence; and performing an addition operation or a subtraction operation on each of the n scaled constellation diagrams. A scaling ratio of each constellation diagram may be referred to as a scaling factor of the constellation diagram or a weight of the constellation diagram in the linear combination. This application is not limited to performing the addition operation or the subtraction operation on each constellation diagram. Operations performed on different constellation diagrams may be the same or different. In a possible implementation, the addition operation is performed on one of the n scaled constellation diagrams, and the subtraction operation is performed on another constellation diagram. Whether an operation corresponding to each constellation diagram is the addition operation or the subtraction operation determines a rotation angle of the constellation diagram in the combined constellation diagram.

It may be understood that, a part of the n constellation diagrams may not be scaled. It may be considered that scaling is performed on the constellation diagrams at a ratio of 1, that is, a scaling factor or a weight is 1.

The combined constellation diagram may also be referred to as a layered constellation diagram or an n-layer constellation diagram. If scaling factors of the n constellation diagrams are sorted in ascending order, in some implementations, a layer of each constellation diagram in the n constellation diagrams may be represented by a sequence number of a scaling factor of the constellation diagram.

The constellation diagram may be replaced with an expression that maps one or more bits to a complex-valued modulation symbol.

m-order modulation means mapping m bits to a complex-valued modulation symbol.

It is assumed that the n constellation diagrams are numbered with integers from 1 to n, and a modulation order of a constellation diagram numbered k is denoted as *Q*ₖ . In some implementations, a scaling factor *α*ₜ of a constellation diagram numbered t in the n constellation diagrams satisfies the following relational expression: ${α}_{t} = {2}^{\frac{{\sum }_{k = 1}^{t - 1} {Q}_{k}}{2} .}$

*Q*ₖ represents a modulation order of a k^{th} constellation diagram in the n constellation diagrams. The relational expression herein is in a form of a formula as an example. It may be understood that the foregoing relational expression may also be in another form, for example, a form of a table or a form of a character string.

In some implementations, a value of t ranges from 2 to n.

In some implementations, a scaling factor of one or more of the n constellation diagrams is 1.

In some implementations, the linear combination satisfies the following relational expression: $d ′ = {\sum }_{t = 2}^{n} {α}_{t} \times {d}_{t} + {d}_{1} .$

*d*^{'} represents a constellation diagram obtained from the linear combination of the n constellation diagrams, *α*ₜ represents a scaling factor of a t^{th} constellation diagram in the n constellation diagrams, *d*₁ represents a 1^{st} constellation diagram in the n constellation diagrams, and *dₜ* represents the t^{th} constellation diagram in the n constellation diagrams.

Optionally, in the foregoing relational expression, a scaling factor *α*ₜ of any constellation diagram may be a positive number or a complex number.

Optionally, in the foregoing relational expression, an operator for any constellation diagram may be replaced with a minus sign.

In some implementations, the combined constellation diagram and a constellation diagram obtained from the linear combination of the n constellation diagrams satisfy the following relational expression: $d = S \times d ′ .$

*d*^{'} represents the constellation diagram obtained from the linear combination of the n constellation diagrams, *d* represents the combined constellation diagram, and *S* represents a power normalization factor of the constellation diagram obtained from the linear combination of the n constellation diagrams.

When n is equal to 2, the combined constellation diagram and two constellation diagrams satisfy the following relational expression: $d = β \left(α\times {d}_{2}+{d}_{1}\right) .$

*β* may represent a power normalization factor, *d*₁ represents one constellation diagram, *d*₂ represents the other constellation diagram, *α* may represent a weight of *d*₂, and *d* represents the combined constellation diagram. Optionally, an operator of *d*₁ may be replaced with a minus sign. Optionally, an operator of *d*₂ may be replaced with a minus sign.

FIG. 5a is an example diagram of an implementation of performing m-order modulation on the first bit sequence based on the combined constellation diagram. As shown in FIG. 5a, error correction encoding is performed on the first bit sequence to obtain a second bit sequence; and m-order modulation is performed on the second bit sequence based on the combined constellation diagram. The second bit sequence herein may also be referred to as an encoded bit segment.

In this embodiment, FIG. 5b shows another implementation of performing m-order modulation on the first bit sequence based on the combined constellation diagram. The first bit sequence is segmented to obtain g bit segments, g is a positive integer, and the g bit segments are successively denoted as a 1^{st} bit segment, a 2^{nd} bit segment, ..., and a g^{th} bit segment. The g bit segments are input into g encoders and encoded to obtain g encoded bit segments that are in one-to-one correspondence with the g bit segments, and the g encoded bit segments are successively denoted as a 1^{st} encoded bit segment, a 2^{nd} encoded bit segment, ..., and a g^{th} encoded bit segment. m-order modulation is performed on the g encoded bit segments by using the combined constellation diagram, to obtain a complex-valued modulation symbol. The g encoded bit segments and the n constellations satisfy a preset relationship, and g is a positive integer less than or equal to n.

For example, g is equal to n, and the n encoded bit segments are in one-to-one correspondence with the n constellation diagrams. The first bit sequence is segmented to obtain n bit segments, n is a positive integer, and the n bit segments are successively denoted as a 1^{st} bit segment, a 2^{nd} bit segment, ..., and an n^{th} bit segment. The n bit segments are input into n encoders and encoded to obtain n encoded bit segments that are in one-to-one correspondence with the n bit segments, and the n encoded bit segments are successively denoted as a 1^{st} encoded bit segment, a 2^{nd} encoded bit segment, ..., and an n^{th} encoded bit segment. m-order modulation is performed on the n encoded bit segments by using the combined constellation diagram, to obtain a complex-valued modulation symbol.

When the n bit segments are encoded, in some implementations, only p bit segments in the n bit segments may be encoded to obtain p encoded bit segments that are in one-to-one correspondence with the p bit segments. An encoding code rate of at least one of the p encoded bit segments is less than 1, and p is a positive integer less than or equal to n. In addition, n-p bit segments are not encoded. The n-p bit segments may be considered as n-p encoded bit segments with an encoding code rate of 1. The n-p encoded bit segments and the foregoing p encoded bit segments form the n encoded bit segments. It may be understood that encoding code rates of the p encoded bit segments may be all the same, or may be partially the same and partially different, or may be all different (that is, encoding code rates of any two of the p encoded bit segments are different).

When the n bit segments are encoded, in some other implementations, the n bit segments may be separately encoded, to obtain n encoded bit segments that are in one-to-one correspondence with the n bit segments. An encoding code rate of each of the n encoded bit segments is less than or equal to 1, and encoding code rates of at least two encoded bit segments are different.

In this embodiment, an example of a code rate is a ratio of a quantity of bits before encoding to a quantity of bits after encoding. For example, if the quantity of bits before encoding is A, and the quantity of bits after encoding is B, the code rate is a quotient obtained by dividing A by B, and A and B are positive integers. For example, this encoding is channel encoding.

Optionally, B may be greater than A, equal to A, or less than A. When B is greater than A, the code rate is higher than 1; when B is equal to A, the code rate is equal to 1; or when B is less than A, the code rate is lower than 1. When A bits are not encoded, and B bits are A bits, it may be understood that A bits are encoded at a code rate of 1.

In general, a higher code rate indicates better transmission reliability of encoded bits, but a larger quantity of bits after encoding; and a lower code rate indicates poorer transmission reliability of encoded bits, but a smaller quantity of encoded bits.

When the n encoded bit segments are modulated by using the combined constellation diagram, in some implementations, the n encoded bit segments are combined into one bit sequence, and then m-order modulation is performed on the bit sequence by using the combined constellation diagram. This implementation may be understood as that indexes of bits in the n encoded bit segments are consecutively numbered. For ease of description, the bit sequence may be referred to as a second bit sequence or an encoded bit segment.

An implementation in which the n encoded bit segments are combined into one bit sequence is as follows: The n constellation diagrams are numbered in ascending order of weights of the n constellation diagrams, the numbers are integers from 1 to n, a constellation diagram with a larger weight corresponds to a larger number, and a modulation order of a constellation diagram numbered k is denoted as *Q*ₖ; the n encoded bit segments are numbered in ascending order of code rates of the n encoded bit segments, the numbers are integers from 1 to n, and a constellation diagram with a higher code rate corresponds to a larger number; and a specified quantity of bits are sequentially extracted from the n encoded bit segments in a specified direction in ascending order of the numbers of the n encoded bit segments, and are combined together, and the step is repeated to obtain the second bit sequence. A quantity of bits extracted from each encoded bit segment each time is equal to a modulation order of a corresponding constellation diagram, a number of a constellation diagram corresponding to each encoded bit segment is the same as a number of the encoded bit segment, and the specified direction may be from left to right or from right to left.

For example, n is equal to 2, a modulation order of a 1^{st} constellation diagram is 2, a modulation order of 2^{nd} constellation diagram is 2, a 1^{st} encoded bit segment includes "011010011010", and a 2^{nd} encoded bit segment may be "011011010101". From right to left, a 1^{st} bit "0" and a 2^{nd} bit "1" in the 1^{st} encoded bit segment are extracted (because the modulation order of the 1^{st} constellation diagram is 2, 2 bits are extracted at a time), and a 1^{st} bit "1" and a 2^{nd} bit "0" in the 2^{nd} encoded bit segment (because the modulation order of the 2^{nd} constellation diagram is 2, 2 bits are extracted at a time), to obtain a bit sequence "0110". The bit extraction operation is repeated for a second time, a 3^{rd} bit "0" and a 4^{th} bit "1" in the 1^{st} bit segment are extracted, and a 3^{rd} bit "1" and a 4^{th} bit "0" in the 2^{nd} bit segment are extracted, to obtain a new bit sequence "01100110" by combining the extracted bits with the bit sequence obtained last time. By analogy, a second bit sequence "010110101110010101100110" may be obtained.

If the second bit sequence includes encoded bits with a plurality of code rates, when the second bit sequence is modulated by using the combined constellation diagram, in some implementations, an encoded bit with a higher code rate may be mapped by using a constellation diagram with a greater scaling factor. In a constellation diagram with a greater scaling factor, a distance between constellation points corresponding to different corresponding bit sequences in the combined constellation diagram is larger, thereby lowering a probability that the bit sequences are incorrectly decoded at a receive end, and better ensuring transmission performance.

In this embodiment, when n is equal to 2, a first example of mapping relational expressions of the combined constellation diagram is as follows: ${d}_{2} = \left(1-2b\left(4i\right)\right) + j \left(1-2b\left(4i+1\right)\right) ;$ ${d}_{1} = \left(1-2b\left(4i+2\right)\right) + j \left(1-2b\left(4i+3\right)\right) ;$ and $d = \frac{1}{\sqrt{10}} \left(2\times {d}_{2}-{d}_{1}\right) .$

Two constellation diagrams are in one-to-one correspondence with two mapping relational expressions *d*₂ and *d*₁. *d* represents the combined constellation diagram with a modulation order of 4. For a constellation diagram corresponding to *d*₂, a scaling factor is 2, an operator is a plus sign, and a modulation order is 2. For a constellation diagram corresponding to *d*₁, a scaling factor is 1, a modulation order is 2, and an operator is a minus sign. $\frac{1}{\sqrt{10}}$ is a power normalization factor of the combined constellation diagram. i is an integer from 0 up to a smallest integer less than h or equal to h, and h is equal to a quotient obtained by dividing a quantity of bits included in the second bit sequence by 4. *b*(•) represents a bit that is in the second bit sequence and whose index is a value in parentheses.

When 4-order modulation mapping is performed on the second bit sequence by using the combined constellation diagram in the example, for example, the second bit sequence may include encoded bits with two encoding code rates. Because the scaling factor of *d*₂ is greater than the scaling factor of *d*₁, in the encoded bits with the two encoding code rates, 2-order modulation may be performed on encoded bits with a higher encoding code rate by using *d*₂, and 2-order modulation may be performed on encoded bits with a lower encoding code rate may be modulated by using *d*₁.

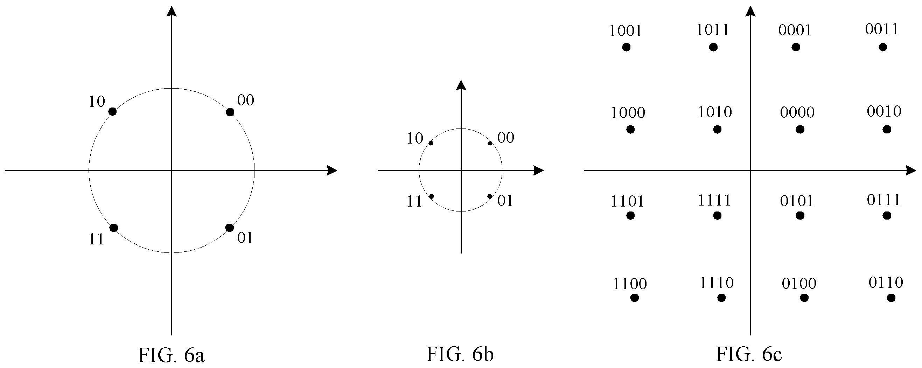

FIG. 6a, FIG. 6b, and FIG. 6c are example diagrams of a combination of the combined constellation diagram in the example. FIG. 6a is the constellation diagram corresponding to *d*₂ and may be referred to as a QPSK constellation diagram. FIG. 6b is the constellation diagram corresponding to *d*₁ and may be referred to as a QPSK constellation diagram. FIG. 6c is the combined constellation diagram and may be referred to as a 16QAM constellation diagram.

Optionally, in the example, an operator of the constellation diagram *d*₂ may be replaced with a minus sign. Optionally, in the example, an operator of the constellation diagram *d*₁ may be replaced with a plus sign.

When n is equal to 2, a second example of the combined constellation diagram is as follows: ${d}_{2} = \left(1-2b\left(6i\right)\right) + j \left(1-2b\left(6i+1\right)\right) ;$ ${d}_{1} = \left(1-2b\left(6i+2\right)\right) \left(2-\left(1-2b\left(6i+4\right)\right)\right) + j \left(1-2b\left(6i+3\right)\right) \left(2-\left(1-2b\left(6i+5\right)\right)\right) ;$ and $d = \frac{1}{\sqrt{42}} \left(4\times {d}_{2}+{d}_{1}\right) .$

Two constellation diagrams are *d*₂ and *d*₁. *d* represents the combined constellation diagram with a modulation order of 6. For a constellation diagram corresponding to *d*₂, a scaling factor is 4, an operator is a plus sign, and a modulation order is 2. For a constellation diagram corresponding to *d*₁, a scaling factor is 1, a modulation order is 4, and an operator is a plus sign. $\frac{1}{\sqrt{42}}$ is a power normalization factor for constellation points in the combined constellation diagram. i is an integer from 0 up to a smallest integer less than h or equal to h, and h is equal to a quotient obtained by dividing a quantity of bits included in the second bit sequence by 6. *b*(•) represents a bit that is in the second bit sequence and whose index is a value in parentheses.

When 6-order modulation mapping is performed on the second bit sequence by using the combined constellation diagram in the example, for example, the second bit sequence may include encoded bits with two encoding code rates. Because the scaling factor of *d*₂ is greater than the scaling factor of *d*₁, in the encoded bits with the two encoding code rates, 2-order modulation may be performed on encoded bits with a higher encoding code rate by using *d*₂, and 4-order modulation may be performed on encoded bits with a lower encoding code rate may be modulated by using *d*₁.

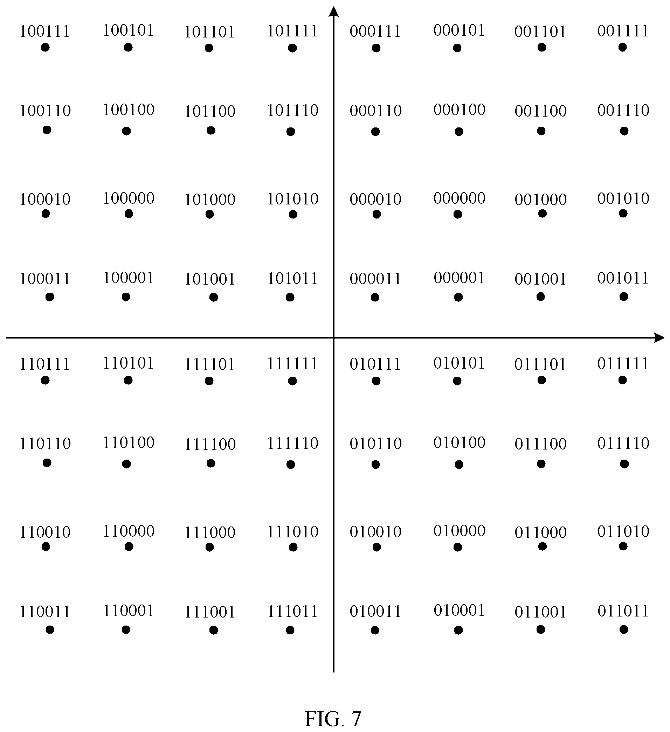

FIG. 7 is an example diagram of the combined constellation diagram in the example. The combined constellation diagram may also be referred to as a 64QAM constellation diagram.

Optionally, in the example, an operator of the constellation diagram *d*₂ may be a minus sign. Optionally, in the example, an operator of the constellation diagram *d*₁ may be a minus sign.

When n is equal to 2, a third example of mapping relational expressions of the combined constellation diagram is as follows: ${d}_{2} = \left(1-2b\left(8i\right)\right) \left(2-\left(1-2b\left(8i+2\right)\right)\right) + j \left(1-2b\left(8i+1\right)\right) \left(2-\left(1-2b\left(8i+3\right)\right)\right) ;$ ${d}_{1} = \left(1-2b\left(8i+4\right)\right) \left(2-\left(1-2b\left(8i+6\right)\right)\right) + j \left(1-2b\left(8i+5\right)\right) \left(2-\left(1-2b\left(8i+7\right)\right)\right) ;$ and $d = \frac{1}{\sqrt{170}} \left(4\times {d}_{2}+{d}_{1}\right) .$

Two constellation diagrams are *d*₂ and *d*₁. *d* represents the combined constellation diagram with a modulation order of 8. For a constellation diagram corresponding to *d*₂, a scaling factor is 4, an operator is a plus sign, and a modulation order is 4. For a constellation diagram corresponding to *d*₁, a scaling factor is 1, a modulation order is 4, an operator is a plus sign. $\frac{1}{\sqrt{170}}$ is a power normalization factor for constellation points in the combined constellation diagram. *i* is an integer from 0 up to a smallest integer less than h or equal to h, and h is equal to a quotient obtained by dividing a quantity of bits included in the second bit sequence by 8. *b*(•) represents a bit that is in the second bit sequence and whose index is a value in parentheses.

When 8-order modulation mapping is performed on the second bit sequence by using the combined constellation diagram in the example, for example, the second bit sequence may include encoded bits with two encoding code rates. Because the scaling factor of *d*₂ is greater than the scaling factor of *d*₁, in the encoded bits with the two encoding code rates, 4-order modulation may be performed on encoded bits with a higher encoding code rate by using *d*₂, and 4-order modulation may be performed on encoded bits with a lower encoding code rate may be modulated by using *d*₁.

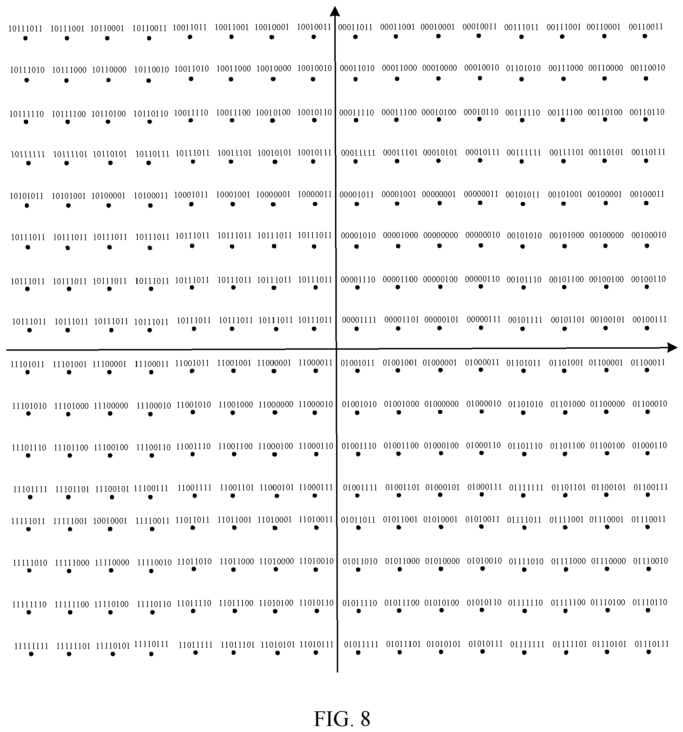

FIG. 8 is an example diagram of the combined constellation diagram in the example. The combined constellation diagram may also be referred to as a 256QAM constellation diagram.

Optionally, in the example, an operator of the constellation diagram *d*₂ may be a minus sign. Optionally, in the example, an operator of the constellation diagram *d*₁ may be a minus sign.

When n is equal to 2, a fourth example of mapping relational expressions of the combined constellation diagram is as follows: ${d}_{2} = \left(1-2b\left(10i\right)\right) \left(2-\left(1-2b\left(10i+2\right)\right)\right) + j \left(1-2b\left(10i+1\right)\right) \left(2-\left(1-2b\left(10i+3\right)\right)\right) ;$ $\begin{matrix}{d}_{1} = \left(1-2b\left(10i+4\right)\right) \left(4-\left(1-2b\left(10i+6\right)\right)\right) \left(2-\left(1-2b\left(10i+8\right)\right)\right) \\ + j \left(1-2b\left(10i+5\right)\right) \left(4-\left(1-2b\left(10i+7\right)\right)\right) \left(2-\left(1-2b\left(10i+9\right)\right)\right)\end{matrix} ;$ and $d = \frac{1}{\sqrt{682}} \left(8\times {d}_{2}+{d}_{1}\right) .$

Two constellation diagrams are *d*₂ and *d*₁. *d* represents the combined constellation diagram with a modulation order of 10. For a constellation diagram corresponding to *d*₂, a scaling factor is 8, an operator is a plus sign, and a modulation order is 4. For a constellation diagram corresponding to *d*₁, a scaling factor is 1, a modulation order is 6, and an operator is a plus sign. $\frac{1}{\sqrt{682}}$ is a power normalization factor for constellation points in the combined constellation diagram. *i* is an integer from 0 up to a smallest integer less than h or equal to h, and h is equal to a quotient obtained by dividing a quantity of bits included in the second bit sequence by 10. *b*(•) represents a bit that is in the second bit sequence and whose index is a value in parentheses.

When 10-order modulation mapping is performed on the second bit sequence by using the combined constellation diagram in the example, for example, the second bit sequence may include encoded bits with two encoding code rates. Because the scaling factor of *d*₂ is greater than the scaling factor of *d*₁, in the encoded bits with the two encoding code rates, 4-order modulation may be performed on encoded bits with a higher encoding code rate by using *d*₂, and 6-order modulation may be performed on encoded bits with a lower encoding code rate may be modulated by using *d*₁.

Optionally, in the example, an operator of the constellation diagram *d*₂ may be replaced with a minus sign. Optionally, in the example, an operator of the constellation diagram *d*₁ may be replaced with a minus sign.

In this embodiment, when n is equal to 2, in the two constellation diagrams, the constellation diagram with a smaller scaling factor may be referred to as an inner constellation diagram, and the constellation diagram with a greater scaling factor may be referred to as an outer constellation diagram.

When n is equal to 3, a first example of mapping relational expressions of the combined constellation diagram is as follows: ${d}_{3} = \left(1-2b\left(6i\right)\right) + j \left(1-2b\left(6i+1\right)\right) ;$ ${d}_{2} = \left(1-2b\left(6i+2\right)\right) + j \left(1-2b\left(6i+3\right)\right) ;$ ${d}_{1} = \left(1-2b\left(6i+4\right)\right) + j \left(1-2b\left(6i+5\right)\right) ;$ and $d = \frac{1}{\sqrt{42}} \left(4{d}_{3}+2\times {d}_{2}+{d}_{1}\right) .$

Three constellation diagrams are in one-to-one correspondence with three mapping relational expressions *d*₃, *d*₂, and *d*₁. *d* represents the combined constellation diagram with a modulation order of 6. For a constellation diagram corresponding to *d*₃, a scaling factor is 4, an operator is a plus sign, and a modulation order is 2. For a constellation diagram corresponding to *d*₂, a scaling factor is 2, an operator is a plus sign, and a modulation order is 2. For a constellation diagram corresponding to *d*₁, a scaling factor is 1, a modulation order is 2, and an operator is a plus sign. $\frac{1}{\sqrt{42}}$ is a power normalization factor of the combined constellation diagram. i is an integer from 0 up to a smallest integer less than h or equal to h, and h is equal to a quotient obtained by dividing a quantity of bits included in the second bit sequence by 4. *b*(•) represents a bit that is in the second bit sequence and whose index is a value in parentheses.

When 6-order modulation mapping is performed on the second bit sequence by using the combined constellation diagram in the example, for example, the second bit sequence may include encoded bits with three encoding code rates. Because the scaling factor of *d*₃ is greater than the scaling factor of *d*₂, and the scaling factor of *d*₂ is greater than the scaling factor of *d*₁, in encoded bits with the three encoding code rates, 2-order modulation may be performed on encoded bits with a highest encoding code rate by using *d*₃, 2-order modulation may be performed on encoded bits with a middle encoding code rate by using *d*₂, and 2-order modulation may be performed on encoded bits with a lowest encoding code rate by using *d*₁.

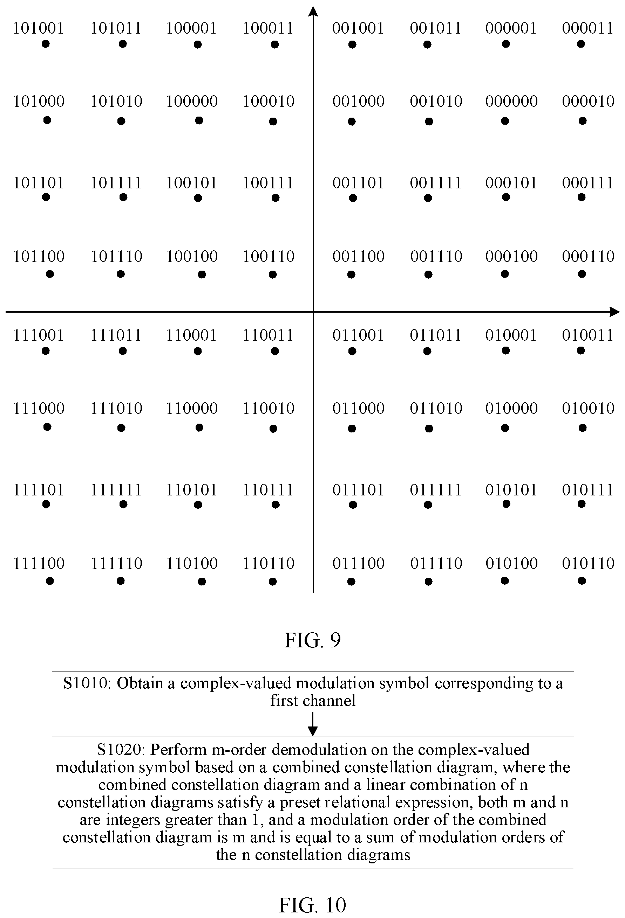

FIG. 9 is an example diagram of the combined constellation diagram in the example. The combined constellation diagram may also be referred to as a 64QAM constellation diagram.

Optionally, in the example, an operator of the constellation diagram *d*₂ may be replaced with a minus sign. Optionally, in the example, an operator of the constellation diagram *d*₁ may be replaced with a minus sign. Optionally, in the example, an operator of the constellation diagram *d*₃ may be replaced with a minus sign.

In the foregoing examples of the mapping relational expressions of the combined constellation diagram, in some implementations, all bits in the second bit sequence are consecutively numbered.

When the n encoded bit segments are modulated by using the combined constellation diagram, in some implementations, for each of the n encoded bit segments, consecutive numbering is restarted. Optionally, the n bit segments are in one-to-one correspondence with the n constellation diagrams, and an index of a bit combination in a mapping relationship corresponding to each constellation diagram is an index of a bit combination in a corresponding bit segment. For example, the n bit segments include at least two bit segments with different encoding code rates, and a constellation diagram corresponding to a bit segment with a higher code rate has a larger weight in the linear combination.

The following describes a mapping relational expression of the combined constellation diagram when consecutive numbering is restarted for indexes of bits in each of the n encoded bit segments.

In this embodiment, when n is equal to 2, a fifth example of mapping relational expressions of the combined constellation diagram is as follows: ${d}_{1} = \left(1-2{b}_{1}\left(2i\right)\right) + j \left(1-2{b}_{1}\left(2i+1\right)\right) ;$ ${d}_{2} = \left(1-2{b}_{2}\left(2i\right)\right) + j \left(1-2{b}_{2}\left(2i+1\right)\right) ;$ and $d = \frac{1}{\sqrt{10}} \left(2\times {d}_{2}-{d}_{1}\right) .$

Differences between the parameters in the example and the parameters in the first example when n is equal to 2 include: *b*₁(•) represents a bit that is in the 1^{st} bit segment and whose index is a value in parentheses, and *b*₂(•) represents a bit that is in the 2^{nd} bit segment and whose index is a value in parentheses. A code rate of the 2^{nd} bit segment may be higher than a code rate of the 1^{st} bit segment.

Optionally, in the example, an operator of the constellation diagram *d*₂ may be replaced with a minus sign. Optionally, in the example, an operator of the constellation diagram *d*₁ may be replaced with a plus sign.

When n is equal to 2, a sixth example of mapping relational expressions of the combined constellation diagram is as follows: ${d}_{1} = \left(1-2{b}_{1}\left(4i\right)\right) \left(2-\left(1-2{b}_{1}\left(4i+2\right)\right)\right) + j \left(1-2{b}_{1}\left(4i+1\right)\right) \left(2-\left(1-2{b}_{1}\left(4i+3\right)\right)\right) ;$ ${d}_{2} = \left(1-2{b}_{2}\left(2i\right)\right) + j \left(1-2{b}_{2}\left(2i+1\right)\right) ;$ and $d = \frac{1}{\sqrt{42}} \left(4\times {d}_{2}+{d}_{1}\right) .$

Differences between the parameters in the example and the parameters in the second example when n is equal to 2 include: *b*₁(•) represents a bit that is in the 1^{st} bit segment and whose index is a value in parentheses, and *b*₂(•) represents a bit that is in the 2^{nd} bit segment and whose index is a value in parentheses. The code rate of the 2^{nd} bit segment may be higher than the code rate of the 1^{st} bit segment.

Optionally, in the example, an operator of the constellation diagram *d*₂ may be a minus sign. Optionally, in the example, an operator of the constellation diagram *d*₁ may be a minus sign.

When n is equal to 2, a seventh example of mapping relational expressions of the combined constellation diagram is as follows: ${d}_{1} = \left(1-2{b}_{1}\left(4i\right)\right) \left(2-\left(1-2{b}_{1}\left(4i+2\right)\right)\right) + j \left(1-2{b}_{1}\left(4i+1\right)\right) \left(2-\left(1-2{b}_{1}\left(4i+3\right)\right)\right) ;$ ${d}_{2} = \left(1-2{b}_{2}\left(4i\right)\right) \left(2-\left(1-2{b}_{2}\left(4i+2\right)\right)\right) + j \left(1-2{b}_{2}\left(4i+1\right)\right) \left(2-\left(1-2{b}_{2}\left(4i+3\right)\right)\right) ;$ and $d = \frac{1}{\sqrt{170}} \left(4\times {d}_{2}+{d}_{1}\right) .$

Differences between the parameters in the example and the parameters in the third example when n is equal to 2 include: *b*₁(•) represents a bit that is in the 1^{st} bit segment and whose index is a value in parentheses, and *b*₂(•) represents a bit that is in the 2^{nd} bit segment and whose index is a value in parentheses. The code rate of the 2^{nd} bit segment may be higher than the code rate of the 1^{st} bit segment.

Optionally, in the example, an operator of the constellation diagram *d*₂ may be a minus sign. Optionally, in the example, an operator of the constellation diagram *d*₁ may be a minus sign.

When n is equal to 2, an eighth example of mapping relational expressions of the combined constellation diagram is as follows: $\begin{matrix}{d}_{1} = \left(1-2{b}_{1}\left(6i\right)\right) \left(4-\left(1-2{b}_{1}\left(6i+2\right)\right)\right) \left(2-\left(1-2{b}_{1}\left(6i+4\right)\right)\right) \\ + j \left(1-2{b}_{1}\left(6i+1\right)\right) \left(4-\left(1-2{b}_{1}\left(6i+3\right)\right)\right) \left(2-\left(1-2{b}_{1}\left(6i+5\right)\right)\right)\end{matrix} ;$ ${d}_{2} = \left(1-2{b}_{2}\left(4i\right)\right) \left(2-\left(1-2{b}_{2}\left(4i+2\right)\right)\right) + j \left(1-2{b}_{2}\left(4i+1\right)\right) \left(2-\left(1-2{b}_{2}\left(4i+3\right)\right)\right) ;$ and $d = \frac{1}{\sqrt{682}} \left(8\times {d}_{2}+{d}_{1}\right) .$.

Differences between the parameters in the example and the parameters in the fourth example when n is equal to 2 include: *b*₁(•) represents a bit that is in the 1^{st} bit segment and whose index is a value in parentheses, and *b*₂(•) represents a bit that is in the 2^{nd} bit segment and whose index is a value in parentheses. The code rate of the 2^{nd} bit segment may be higher than the code rate of the 1^{st} bit segment.

Optionally, in the example, an operator of the constellation diagram *d*₂ may be replaced with a minus sign. Optionally, in the example, an operator of the constellation diagram *d*₁ may be replaced with a minus sign.

When n is equal to 3, a second example of mapping relational expressions of the combined constellation diagram is as follows: ${d}_{1} = \left(1-2{b}_{1}\left(2i\right)\right) + j \left(1-2{b}_{1}\left(2i+1\right)\right) ;$ ${d}_{2} = \left(1-2{b}_{2}\left(2i\right)\right) + j \left(1-2{b}_{2}\left(2i+1\right)\right) ;$ ${d}_{3} = \left(1-2{b}_{3}\left(2i\right)\right) + j \left(1-2{b}_{3}\left(2i+1\right)\right) ;$ and $d = \frac{1}{\sqrt{42}} \left(4{d}_{3}+2\times {d}_{2}+{d}_{1}\right) .$

Differences between the parameters in the example and the parameters in the first example when n is equal to 3 includes: *b*₁(•) represents a bit that is in the 1^{st} bit segment and whose index is a value in parentheses, *b*₂(•) represents a bit that is in the 2^{nd} bit segment and whose index is a value in parentheses, and *b*₃(•) represents a bit that is in a 3^{rd} bit segment and whose index is a value in parentheses. A code rate of the 3^{rd} bit segment may be higher than the code rate of the 2^{nd} bit segment, and the code rate of the 2^{nd} bit segment may be higher than the code rate of the 1^{st} bit segment.

Optionally, in the example, an operator of the constellation diagram *d*₂ may be replaced with a minus sign. Optionally, in the example, an operator of the constellation diagram *d*₁ may be replaced with a minus sign. Optionally, in the example, an operator of the constellation diagram *d*₃ may be replaced with a minus sign.

To better understand the technical solutions for modulation performed by using the combined constellation diagram provided in this application, the following describes the technical solutions with reference to examples.

In an example, a second bit sequence includes "010110101110010101100110", bit indexes are consecutively numbered from right to left, starting from 0. A combined constellation diagram is the first example of the combined constellation diagram when n is equal to 2. A modulation order of the combined constellation diagram is 4, and the second bit sequence includes 24 bits. Therefore, a value of *i* starts from 0, is sequentially incremented by 1, and has a maximum value of 5. Bits with indexes 4*i* and 4*i* + 1 may be encoded bits with a same code rate, for example, may be bits in a same encoded bit segment. Bits with indexes 4*i* + 2 and 4*i* + 3 may be encoded bits with a same code rate, for example, may be bits in a same encoded bit segment. The code rate of the bits with the indexes 4i and 4*i* + 1 may be higher than the code rate of bits with the indexes 4*i* + 2 and 4*i* + 3.

When *i* is 0, b(4*i*) represents a bit with an index 0 in the second bit sequence, that is, a 1^{st} bit "0" from the right; *b*(4*i*+1) represents a bit with an index 1 in the second bit sequence, that is, a 2^{nd} bit "1" from the right; *b*(4*i*+2) represents a bit with an index 2 in the second bit sequence, that is, a 3^{rd} bit "1" from the right; and *b*(4*i*+3) represents a bit with an index 3 in the second bit sequence, that is, a 4^{th} bit "0" from the right.

Therefore, when *i* is equal to 0, a calculation process of *d* is as follows: ${d}_{2} = \left(1-2b\left(4i\right)\right) + j \left(1-2b\left(4i+1\right)\right) = \left(1-2\times 0\right) + j \left(1-2\times 1\right) = 1 - j ;$ ${d}_{1} = \left(1-2{b}_{2}\left(4i+2\right)\right) + j \left(1-2b\left(4i+3\right)\right) = \left(1-2\times 1\right) + j \left(1-2\times 0\right) = - 1 + j ;$ and $d = \frac{1}{\sqrt{10}} \left(2\times {d}_{2}-{d}_{1}\right) = \frac{1}{\sqrt{10}} \left(2\times \left(1-j\right)-\left(-1+j\right)\right) = \frac{1}{\sqrt{10}} \left(3-3j\right) .$

In other words, without power normalization, a modulation symbol mapped from a bit combination "0110" has a real part of "3" and an imaginary part of "-3", which exactly corresponds to coordinates of a constellation point on which "0110" is located shown in FIG. 4.

In another example, a 1^{st} encoded bit segment is "011011010101", a 2^{nd} encoded bit segment is "011010011010", a code rate of the 1^{st} bit segment is higher than a code rate of the 2^{nd} bit segment, consecutive numbering is restarted for indexes of bits in each of the two encoded bit segments, and a combined constellation diagram is the fifth example of the combined constellation diagram when n is equal to 2.

When *i* is equal to 0, for the 1^{st} bit segment, *b*₁(2*i*) represents a bit with an index 0, that is, a 1^{st} bit "1" from the right; *b*₁(2*i*+1) represents a bit with an index 1, that is, a 2^{nd} bit "0" from the right; for the 2^{nd} bit segment, *b*₂(2*i*) represents a bit with an index 0, that is, a 1^{st} bit "0" from the right; and *b*₂(2*i*+1) represents a bit with an index 1, that is, a 2^{nd} bit "1" from the right.

Therefore, when *i* is equal to 0, a calculation process of d is as follows: ${d}_{1} = \left(1-2{b}_{1}\left(2i\right)\right) + j \left(1-2{b}_{1}\left(2i+1\right)\right) = \left(1-2\times 1\right) + j \left(1-2\times 0\right) = - 1 + j ;$ ${d}_{2} = \left(1-2{b}_{2}\left(2i\right)\right) + j \left(1-2{b}_{2}\left(2i+1\right)\right) = \left(1-2\times 0\right) + j \left(1-2\times 1\right) = 1 - j ;$ and $d = \frac{1}{\sqrt{10}} \left(2\times {d}_{2}-{d}_{1}\right) = \frac{1}{\sqrt{10}} \left(2\times \left(1-j\right)-\left(-1+j\right)\right) = \frac{1}{\sqrt{10}} \left(3-3j\right) .$

In other words, without power normalization, a modulation symbol mapped from a bit combination "0110" has a real part of "3" and an imaginary part of "-3", which exactly corresponds to coordinates of a constellation point on which "0110" is located shown in FIG. 4.

It may be understood that a constellation diagram obtained through a linear combination of n constellation diagrams has the following characteristics: In the n constellation diagrams, assuming that the n constellation diagrams are numbered with integers from 1 to n, and a modulation order of a constellation diagram numbered k is denoted as *Q*ₖ, and assuming that bits in a bit sequence corresponding to a constellation point in a combined constellation diagram are numbered from right to left starting from 1, in a bit sequence corresponding to a constellation point in the linearly combined constellation diagram, a sequence including bits from ${\sum }_{k = 1}^{f - 1} {Q}_{k} + 1$ to ${\sum }_{k = 1}^{f} {Q}_{k}$ is a bit sequence corresponding to a constellation point in a constellation diagram numbered f; and a larger absolute value of a scaling factor of the constellation diagram numbered f indicates a larger distance between two constellation points corresponding to different bit sequences numbered from ${\sum }_{k = 1}^{f - 1} {Q}_{k} + 1$ to ${\sum }_{k = 1}^{f} {Q}_{k}$ in the linearly combined constellation diagram, and stronger resistance of the bit sequences numbered from ${\sum }_{k = 1}^{f - 1} {Q}_{k} + 1$ to ${\sum }_{k = 1}^{f} {Q}_{k}$ to channel fading. ${\sum }_{k = 1}^{f - 1} {Q}_{k}$ represents a sum of modulation orders of a constellation diagram numbered 1 to a constellation diagram numbered f-1, and ${\sum }_{k = 1}^{f} {Q}_{k}$ represents a sum of modulation orders of a constellation diagram numbered 1 to a constellation diagram numbered f.

Because the larger distance between constellation points corresponding to the bit sequences numbered from ${\sum }_{k = 1}^{f - 1} {Q}_{k} + 1$ to ${\sum }_{k = 1}^{f} {Q}_{k}$ indicates the stronger resistance of the bit sequences to channel fading, information with higher transmission performance may be mapped, by using a corresponding constellation diagram, to bit sequences with a larger distance in the combined constellation diagram, thereby satisfying information transmission performance.

Further, because the larger distance between constellation points corresponding to the bit sequences numbered from ${\sum }_{k = 1}^{f - 1} {Q}_{k} + 1$ to ${\sum }_{k = 1}^{f} {Q}_{k}$ indicates the stronger resistance of the bit sequence to channel fading, a first bit sequence is segmented and encoded by using encoders with different code rates, and an encoded bit segment with a higher code rate is mapped, by using a corresponding constellation diagram, to bit sequences with a larger distance in a combined constellation diagram for transmission, so that resistance to channel fading of information encoded with the higher code rate can still be ensured, and encoding complexity can further reduced for encoding at the higher code rate , thereby reducing power consumption of an encoder end.

FIG. 6a, FIG. 6b, and FIG. 6c are used as examples. A modulation order of a constellation diagram shown in FIG. 6a is 2, and a modulation order of a constellation diagram shown in FIG. 6b is 2. Each constellation point in FIG. 6c corresponds to 4 bits. It is assumed that the 4 bits are sequentially numbered 1, 2, 3, and 4 from right to left, and sequences "00", "01", "10", and "11" including bits numbered 1 and 2 in the 4 bits are bit sequences corresponding to constellation points in the constellation diagram shown in FIG. 6a, and sequences "00", "01", "10", and "11" including bits numbered 3 and 4 in the 4 bits are bit sequences corresponding to constellation points in the constellation diagram shown in FIG. 6b.

A scaling factor of the constellation diagram shown in FIG. 6a in the combined constellation diagram is 2, and a scaling factor of the constellation diagram shown in FIG. 6b in the combined constellation diagram is 1. That is, the scaling factor of the constellation diagram shown in FIG. 6a in the combined constellation diagram is greater than the scaling factor of the constellation diagram shown in FIG. 6b in the combined constellation diagram. Therefore, a distance between two constellation points, in the combined constellation diagram, that have different bit sequences numbered 3 and 4 and same bit sequences numbered 1 and 2 is larger than a distance between two constellation points, in the combined constellation diagram, that have different bit sequences numbered 1 and 2 and same bit sequences numbered 3 and 4.

For example, in FIG. 6c, if a distance between a constellation point whose last two bits (that is, bits numbered 1 and 2) are "00" and first two bits (that is, bits numbered 3 and 4) are "10" and a constellation point whose last two bits (that is, bits numbered 1 and 2) are "01" and first two bits (that is, bits numbered 3 and 4) are "10" is denoted as a first distance, and a distance between a constellation point whose first two bits (that is, bits numbered 3 and 4) are "00" and whose last two bits (that is, bits numbered 1 and 2) are 10 and a constellation point whose last two bits (that is, bits numbered 3 and 4) are "01" and whose first two bits (that is, bits numbered 1 and 2) are "10" is denoted as a second distance, the first distance is smaller than the second distance.

Due to impact of noise, a constellation point received at a receive end may be shifted. If a distance between constellation points is larger, even when the constellation point is shifted, a probability that the received constellation point is incorrectly detected is lower. The lower probability that the constellation point received at the receive end is incorrectly detected indicates lower encoding complexity when a transmit end performs error correction encoding.

It can be learned from the foregoing content that, according to the method in this application, m-order modulation is performed on a first bit sequence corresponding to a first channel by using a combined constellation diagram that satisfies a preset relationship with a linear combination of n constellation diagrams. Increasing a distance between constellation points corresponding to bit sequences at same locations in constellation points can reduce a probability that a complex-valued modulation symbol obtained through modulation is incorrectly detected at a receive end, thereby providing support for reducing encoding complexity of a communication device used as a transmit end, and helping reduce encoding power consumption of the communication device.

In this embodiment, a mapping relational expression of a constellation diagram in the n constellation diagrams may be compatible with a mapping relational expression in an existing protocol, for example, a mapping relational expression related to a constellation diagram in the NR protocol 38.211.

In some implementations, the n constellation diagrams may be determined by a communication device. In this case, a communication device used as an encoder end may send indication information to a communication device used as a decoder, to indicate the n constellation diagrams, thereby ensuring consistency between encoding and decoding of both parties.

In some other implementations, the n constellation diagrams may be indicated by information received by the communication device from another communication device.

In still some other implementations, the n constellation diagrams may be predefined in a communication protocol. The communication device may configure a part of the constellation diagrams according to a definition in the communication protocol.

In some implementations, weights of the n constellation diagrams may be determined by a communication device. In this case, a communication device used as an encoder end may send indication information to a communication device used as a decoder, to indicate the weights of the n constellation diagrams, thereby ensuring consistency between encoding and decoding of both parties.

In some other implementations, the weights of the n constellation diagrams may be indicated by information received by the communication device from another communication device.

In still some other implementations, the weights of the n constellation diagrams may be predefined in a communication protocol. The communication device may configure a part of the constellation diagrams according to a definition in the communication protocol.

In some implementations, the communication device may determine the linear combination based on the obtained n constellation diagrams and weights. In this implementation, the communication device may further send information to another communication device, to indicate the linear combination.

In some other implementations, the linear combination may be defined in a communication protocol. The communication device may configure the linear combination based on a definition in the communication protocol.

If a plurality of linear combinations are defined in the communication protocol, in some implementations, the communication device may determine, from the plurality of linear combinations based on requirements, a linear combination to be used. Optionally, the communication device may indicate, to another communication device, the linear combination selected by the communication device.

In still some other implementations, the linear combination may be indicated by information received by the communication device from another communication device.

In some implementations, after obtaining the linear combination, the communication device may determine the combined constellation diagram based on the linear combination. For the relational expression satisfied by the linear combination and the combined constellation diagram, refer to the relational expression satisfied by d in the foregoing content.

In some other implementations, the combined constellation diagram may be defined in a communication protocol. The communication device may configure the combined constellation diagram based on a definition in the communication protocol.

If a plurality of combined constellation diagrams are defined in the communication protocol, in some implementations, the communication device may determine, from the plurality of combined constellation diagrams based on requirements, a combined constellation diagram to be used. Optionally, the communication device may indicate, to another communication device, the combined constellation diagram selected by the communication device.

In some other implementations, the combined constellation diagram may be indicated by information received by the communication device from another communication device.

It may be understood that the another communication device in the foregoing content may be a communication device used as a decoder, thereby ensuring consistency between encoding and decoding of both parties.

FIG. 10 is a schematic flowchart of a communication method according to an embodiment of this application. The method may include S1010 and S1020. The method may be performed by a decoding apparatus, and the decoding apparatus may also be referred to as a communication apparatus.

The decoding apparatus may be a communication device, or a chip, a chip system, a processor, or a processing circuit used in the communication device. An example of the communication device is a network device, a terminal, or a chip, a chip system, a processor, or a processing circuit used in the network device or the terminal. When performing the method in a communication process, the communication device may be referred to as a receive end, or when serving as the receive end, the communication device may perform the method.

S1010: Obtain a complex-valued modulation symbol corresponding to a first channel. The first channel is from another device.

For a related meaning of the first channel, refer to the content in the embodiment shown in FIG. 3. Details are not described herein again.

The complex-valued modulation symbol corresponding to the first channel may be understood as a complex-valued modulation symbol transmitted on the first channel, a complex-valued modulation symbol carried on the first channel, or a complex-valued modulation symbol of the first channel.

In a possible implementation, the complex-valued modulation symbol is obtained by performing m-order modulation on the first bit sequence based on a combined constellation diagram, where the combined constellation diagram and a linear combination of n constellation diagrams satisfy a preset relational expression, both m and n are integers greater than 1, and a modulation order of the combined constellation diagram is m and is equal to a sum of modulation orders of the n constellation diagrams.

Further, the method may further include:
S1020: Perform m-order demodulation on the complex-valued modulation symbol based on a combined constellation diagram, where the combined constellation diagram and a linear combination of n constellation diagrams satisfy a preset relational expression, both m and n are integers greater than 1, a modulation order of the combined constellation diagram is m and is equal to a sum of modulation orders of the n constellation diagrams, and weights of at least two of the n constellation diagrams in the linear combination are different.

In this embodiment, a process of performing m-order demodulation on the complex-valued modulation symbol based on the combined constellation diagram to obtain the bit sequence may be considered as an inverse process of performing modulation on the bit sequence based on the combined constellation diagram in the embodiment shown in FIG. 3.

For example, assuming that the complex-valued modulation symbol corresponding to the first channel is denoted as I1+jQ1, a constellation point projected as I1 on an I axis and projected as Q1 on a Q axis is found in the combined constellation diagram, and a bit sequence corresponding to the constellation point is a bit sequence obtained through demodulation.

In this embodiment, after the bit sequence is obtained by performing m-order demodulation on the complex-valued modulation symbol, the bit sequence may be decoded.

It can be learned from the descriptions of the combined constellation diagram in the embodiment shown in FIG. 3 that, due to impact of noise, a constellation point received at a receive end may be shifted. If a distance between constellation points is larger, even when the constellation point is shifted, a probability that the received constellation point is incorrectly detected is lower. The lower probability that the constellation point received at the receive end is incorrectly detected indicates lower encoding complexity when a transmit end performs error correction encoding. Correspondingly, decoding complexity of a decoder is lower.

It should be understood that, in this application, an indication includes a direct indication (also referred to as an explicit indication) and an implicit indication. Directly indicating information A means including the information A. Implicitly indicating the information A means indicating the information A by using a correspondence between the information A and information B and directly indicating the information B. The correspondence between the information A and the information B may be predefined, prestored, pre-burned, or pre-configured.

It should be understood that, in this application, that information C is used for determining information D includes that the information D is determined only based on the information C, and also includes that the information D is determined based on the information C and other information. In addition, that the information C is used for determining the information D may further include an indirect determining case, for example, a case in which the information D is determined based on information E, and the information E is determined based on the information C.

This application further provides an apparatus. The apparatus may be installed in a communication device or used in cooperation with a communication device, so that the communication device implements a function implemented by the communication device in any one of the foregoing embodiments. For example, the apparatus may be a chip system. The chip system may include a chip, or may include a chip and another discrete component. For another example, the apparatus may be a computer program product. The communication device may be a terminal or a network device.

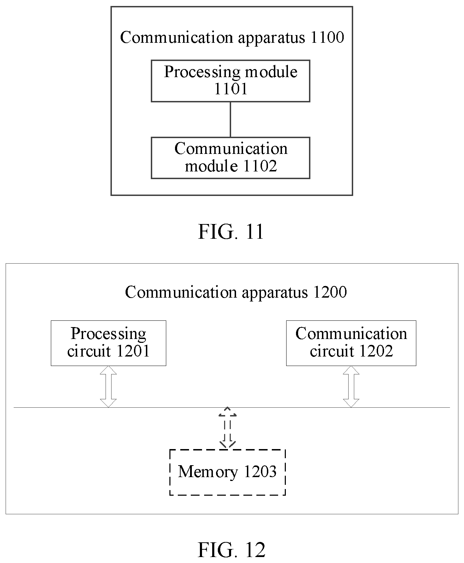

FIG. 11 is a diagram of a structure of a communication apparatus according to an embodiment of this application. As shown in FIG. 11, the apparatus 1100 may include a processing module 1101 and a communication module 1102.

In a first example, the apparatus 1100 may be configured to implement the communication method implemented by the communication apparatus in the embodiment shown in FIG. 3. For example, the processing module 1101 is configured to implement processing-related steps such as obtaining and modulation performed by the communication apparatus in S310 and S320, and the communication module 1102 is configured to implement steps such as sending and/or receiving performed by the communication apparatus in S310 and S320.

In a second example, the apparatus 1100 may be configured to implement the communication method implemented by the communication apparatus in the embodiment shown in FIG. 10. For example, the processing module 1101 is configured to implement processing-related steps such as obtaining and modulation performed by the communication apparatus in S1010 and S1020, and the communication module 1102 is configured to implement steps such as sending and/or receiving performed by the communication apparatus in S1010 and S1020.

FIG. 12 is a diagram of a structure of a communication apparatus according to another embodiment of this application. As shown in FIG. 12, the apparatus 1200 includes a processing circuit 1201 and a communication circuit 1202. The processing circuit 1201 and the communication circuit 1202 are coupled to each other.

It may be understood that the processing circuit may be one or more processors, or may be all or a part of a circuit with a processing function in one or more processors.

It may be understood that the communication circuit 1202 may be a transceiver or an input/output interface.

Optionally, the apparatus 1200 may further include a memory 1203, configured to store instructions executed by the processing circuit 1201, store input data for the processing circuit 1201 to run instructions, or store data generated after the processing circuit 1201 runs instructions.

It may be understood that the memory 1203 may be located outside the processing circuit 1201, or may be located inside the processing circuit 1201.

For example, the processing circuit 1201 is configured to implement a function of the processing module 1101, and the communication circuit 1202 is configured to implement a function of the communication module 1102.

For example, the apparatus 1200 may be a communication device, or may be a chip used in a communication device.

When the apparatus 1200 is a communication device, the communication circuit may be a transceiver. When the apparatus 1200 is a chip, the communication circuit may be an input/output circuit, a bus, a pin, or another type of communication interface. An input circuit in the input/output circuit may be configured for receiving, and an output circuit may be configured for sending.

Some embodiments of this application further provide a computer-readable storage medium. The computer-readable storage medium includes computer instructions. When the computer instructions are run on a processor, the method implemented by the communication device in any one of the foregoing embodiments may be implemented.

In some embodiments of this application, a communication system is further provided. The system may implement the method implemented by the communication device in any one of the foregoing embodiments.

It may be understood that the processor in embodiments of this application may be the following device or all or a part of circuits configured for a processing function in the following device: a central processing unit (central processing unit, CPU), or may be another general-purpose processor, a digital signal processor (digital signal processor, DSP), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented by hardware, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in a chip, for example, an application-specific integrated circuit (application-specific integrated circuit, ASIC), or a chip system, for example, a system on a chip (system on a chip, SoC). In addition, the chip or the chip system may be located in a network device or a terminal device. Certainly, the processor and the storage medium may alternatively exist as discrete components in a network device or a terminal device.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, all or a part of procedures or functions in embodiments of this application are executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments can be combined to form a new embodiment based on an inherent logical relationship of different embodiments.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
obtaining a first bit sequence corresponding to a first channel; and
performing m-order modulation on the first bit sequence based on a combined constellation diagram, wherein the combined constellation diagram and a linear combination of n constellation diagrams satisfy a preset relational expression, both m and n are integers greater than 1, a modulation order of the combined constellation diagram is m and is equal to a sum of modulation orders of the n constellation diagrams, and weights of at least two of the n constellation diagrams in the linear combination are different.

2. The method according to claim 1, wherein the first bit sequence is an encoded bit sequence.

3. The method according to claim 1, wherein the first bit sequence is an uncoded bit sequence.

4. The method according to claim 3, wherein the performing m-order modulation on the first bit sequence based on the combined constellation diagram comprises:
performing m-order modulation on n bit segments or one bit segment obtained by encoding the first bit sequence, wherein encoding code rates of at least two of the n encoded bit segments are different.

5. The method according to any one of claims 1 to 4, wherein a weight of at least one of the n constellation diagrams in the linear combination is associated with a modulation order of one or more of the n constellation diagrams other than the at least one constellation diagram.

6. The method according to any one of claims 1 to 4, wherein a weight *α*ₜ of a t^{th} constellation diagram in the n constellation diagrams in the linear combination satisfies the following relational expression: ${α}_{t} = {2}^{\frac{{\sum }_{k = 1}^{t - 1} {Q}_{k}}{2} ,}$ wherein
t is an integer, t is greater than or equal to 2, t is less than or equal to n, and *Q*ₖ represents a modulation order of a k^{th} constellation diagram in the n constellation diagrams.

7. The method according to any one of claims 1 to 6, wherein the n constellation diagrams comprise a first constellation diagram and a second constellation diagram, wherein
the first constellation diagram is a 2-order constellation diagram, and a weight of the second constellation diagram is 2;
the first constellation diagram is a 4-order constellation diagram, and a weight of the second constellation diagram is 4; or
the first constellation diagram is a 6-order constellation diagram, and a weight of the second constellation diagram is 8.

8. The method according to any one of claims 1 to 6, wherein the n constellation diagrams comprise a first constellation diagram, a second constellation diagram, and a third constellation diagram, the first constellation diagram is a 2-order constellation diagram, the second constellation diagram is a 2-order constellation diagram, a weight of the second constellation diagram is 2, and a weight of the third constellation diagram is 4.

9. The method according to any one of claims 1 to 8, wherein the linear combination satisfies the following relational expression: $d ′ = {\sum }_{t = 2}^{n} {α}_{t} \times {d}_{t} + {d}_{1} ;$ or
the linear combination satisfies the following relational expression: $d ′ = {\sum }_{t = 2}^{n} {α}_{t} \times {d}_{t} - {d}_{1} ,$ wherein
*d*^{'} represents the linear combination, *α*ₜ represents a weight of a t^{th} constellation diagram in the n constellation diagrams in the linear combination, *d*₁ represents a 1^{st} constellation diagram in the n constellation diagrams, and *dₜ* represents the t^{th} constellation diagram in the n constellation diagrams.

10. The method according to any one of claims 1 to 9, wherein the combined constellation diagram and the linear combination satisfy the following relational expression: $d = S * d ′ ,$ wherein
*d*^{'} represents the linear combination, *d* represents the combined constellation diagram, and *S* represents a power normalization factor of the linear combination.

11. The method according to any one of claims 1 to 10, wherein the method further comprises:
receiving or sending first information, wherein the first information indicates the linear combination.

12. The method according to any one of claims 1 to 10, wherein the linear combination is preset.

13. The method according to any one of claims 1 to 12, wherein the method further comprises:
sending or receiving second information, wherein the second information indicates the combined constellation diagram.

14. The method according to any one of claims 1 to 12, wherein the combined constellation diagram is preset.

15. A communication method, wherein the method comprises:
obtaining a complex-valued modulation symbol corresponding to a first channel; and
performing m-order demodulation on the complex-valued modulation symbol based on a combined constellation diagram, wherein the combined constellation diagram and a linear combination of n constellation diagrams satisfy a preset relational expression, both m and n are integers greater than 1, a modulation order of the combined constellation diagram is m and is equal to a sum of modulation orders of the n constellation diagrams, and weights of at least two of the n constellation diagrams in the linear combination are different.

16. The method according to claim 15, wherein a weight of at least one of the n constellation diagrams in the linear combination is associated with a modulation order of one or more of the n constellation diagrams other than the at least one constellation diagram.

17. The method according to claim 16, wherein a weight *α*ₜ of a t^{th} constellation diagram in the n constellation diagrams in the linear combination satisfies the following relational expression: ${α}_{t} = {2}^{\frac{{\sum }_{k = 1}^{t - 1} {Q}_{k}}{2} ,}$ wherein
t is an integer, t is greater than or equal to 2, t is less than or equal to n, and *Q*ₖ represents a modulation order of a k^{th} constellation diagram in the n constellation diagrams.

18. The method according to any one of claims 15 to 17, wherein the n constellation diagrams comprise a first constellation diagram and a second constellation diagram, wherein
the first constellation diagram is a 2-order constellation diagram, and a weight of the second constellation diagram is 2;
the first constellation diagram is a 4-order constellation diagram, and a weight of the second constellation diagram is 4; or
the first constellation diagram is a 6-order constellation diagram, and a weight of the second constellation diagram is 8.

19. The method according to any one of claims 15 to 17, wherein the n constellation diagrams comprise a first constellation diagram, a second constellation diagram, and a third constellation diagram, the first constellation diagram is a 2-order constellation diagram, the second constellation diagram is a 2-order constellation diagram, a weight of the second constellation diagram is 2, and a weight of the third constellation diagram is 4.

20. The method according to any one of claims 15 to 19, wherein the linear combination satisfies the following relational expression: $d ′ = {\sum }_{t = 2}^{n} {α}_{t} \times {d}_{t} + {d}_{1} ;$ or
the linear combination satisfies the following relational expression: $d ′ = {\sum }_{t = 2}^{n} {α}_{t} \times {d}_{t} - {d}_{1} ,$ wherein
*d*^{'} represents the linear combination, *α*ₜ represents a weight of a t^{th} constellation diagram in the n constellation diagrams in the linear combination, *d*₁ represents a 1^{st} constellation diagram in the n constellation diagrams, and *dₜ* represents the t^{th} constellation diagram in the n constellation diagrams.

21. The method according to any one of claims 15 to 20, wherein the combined constellation diagram and the linear combination satisfy the following relational expression: $d = S * d ′ ,$ wherein
*d*^{'} represents the linear combination, *d* represents the combined constellation diagram, and *S* represents a power normalization factor of the linear combination.

22. The method according to any one of claims 15 to 21, wherein the method further comprises:
receiving or sending first information, wherein the first information indicates the linear combination.

23. The method according to any one of claims 15 to 22, wherein the linear combination is preset.

24. The method according to any one of claims 15 to 23, wherein the method further comprises:
sending or receiving second information, wherein the second information indicates the combined constellation diagram.

25. The method according to any one of claims 15 to 23, wherein the combined constellation diagram is preset.

26. A communication apparatus, comprising a functional module configured to implement the method according to any one of claims 1 to 14 or a functional module configured to implement the method according to any one of claims 15 to 25.

27. A communication apparatus, comprising one or more processors and a communication circuit, wherein
the communication circuit is configured for the communication apparatus to perform at least one of signal input or output; and the one or more processors are configured to implement the method according to any one of claims 1 to 14, or the one or more processors are configured to implement the method according to any one of claims 15 to 25.

28. A communication system, comprising a communication apparatus configured to implement the method according to any one of claims 1 to 14 and a communication apparatus configured to implement the method according to any one of claims 15 to 25.
